# EUROPEAN PATENT SPECIFICATION

(11) **EP 3 922 569 B1**
(45) Date of publication and mention of the grant of the patent: **05.07.2023**
(21) Application number: 21730794.1
(22) Date of filing: 14.04.2021
(51) Int. Cl.: B65B 35/56, B65B 35/44, B65G 47/29, B65G 21/20, B65G 15/58, B65G 47/88, B65G 47/26

(54) **BATTERY CELL ALIGNING APPARATUS USING MAGNETIC CONVEYOR**
VORRICHTUNG ZUM AUSRICHTEN VON BATTERIEZELLEN MITTELS EINES MAGNETFÖRDERERS
APPAREIL D'ALIGNEMENT DE CELLULES DE BATTERIE METTANT EN OEUVRE UN TRANSPORTEUR MAGNÉTIQUE

(30) Priority: 14.04.2020 KR 20200045426
(43) Date of publication of application: 15.12.2021
(73) Proprietor: J-ENG Co., Ltd, Gyeongsangnam-do 50567 (KR)
(72) Inventor: JEONG, Weon Tae, Yangsan-si Gyeongsangnam-do 50607 (KR)
(74) Representative: Ipey
(86) International application number: PCT/KR2021/004687
(87) International publication number: WO 2021/210909

(56) References cited:
- EP-A1- 0 264 075
- JP-A- 2007 261 808
- JP-A- 2012 250 803
- JP-B2- 3 845 558
- KR-A- 20170 016 179
- KR-A- 20180 107 847
- US-A- 3 327 835
- US-B1- 6 561 341

## Description

### CROSS REFERENCE TO RELATED APPLICATION

The present application claims priority to Korean Patent Application No. 10-2020-0045426, filed 14.04.2020

### BACKGROUND OF THE INVENTION

### Field of the Invention

The present invention relates generally to a battery cell aligner using a magnetic conveyor and, more particularly, to a battery cell aligner using a magnetic conveyor, the aligner being capable of moving battery cells in a state in which the battery cells are aligned and spaced apart from each other at predetermined intervals.

### Description of the Related Art

In general, the production process of battery cells consists of manufacturing, inspecting, and packing the battery cells. In order to pack the battery cells, the battery cells are moved in a line by a machine, and the moved battery cells are taken out and put in a packaging box. In the relation to such technique, Korean patent No. 10-1149847 allowed to J-ENG Co., Ltd., the same applicant as the present disclosure, has proposed 'Apparatus for array battery cell'.

In the related art, a conveyor is used as a method of moving battery cells.

However, when the plurality of battery cells is moved in a line, there is a problem of damage to a tag marked on an outer surface of a battery cell due to a collision between the battery cells.

A plurality of grippers is arranged in a line to take out the battery cells, so the battery cells should be spaced apart from each other at predetermined intervals to secure a space for the grippers to grip the battery cells.

Patent document EP 0 264 075 A1 discloses a device suitable for aligning battery cells using a magnetic conveyor, comprising: a magnetic conveyor suitable to hold a plurality of battery cells by a magnetic force and to move the plurality of battery cells forward; a guide block provided at each of opposite side surfaces of the magnetic conveyor to align the plurality of battery cells; a rotation block coupled to the guide block by a shaft, and configured such that a front portion thereof and a rear portion thereof are alternately located at an inside and an outside of the guide block by a rotation angle of the rotation block rotated around the shaft, wherein when the front portion of the rotation block is rotated from the outside of the guide block to the inside thereof by one of the battery cells moved forward, the rear portion thereof is rotated to be exposed from the inside of the guide block to the outside of the guide block.

### SUMMARY OF THE INVENTION

Accordingly, the present invention has been made keeping in mind the above problems occurring in the related art, and the present invention is intended to propose a battery cell aligner using a magnetic conveyor, wherein battery cells are aligned during moving on the conveyor and are spaced apart from each other at predetermined intervals to prevent damages to the battery cells caused by a contact between the battery cells.

In order to achieve the above objective, the invention provides a battery cell aligner using a magnetic conveyor, the battery cell aligner including: a magnetic conveyor configured to hold a plurality of battery cells by a magnetic force and to move the plurality of battery cells forward; a guide block provided at each of opposite side surfaces of the magnetic conveyor to align the plurality of battery cells; a rotation block coupled to the guide block by a shaft, and configured such that a front portion thereof and a rear portion thereof may be alternately located at an inside and an outside of the guide block by a rotation angle of the rotation block rotated around the shaft, wherein when the front portion of the rotation block is rotated from the outside of the guide block to the inside thereof by one of the battery cells moved forward, the rear portion thereof may be rotated to be exposed from the inside of the guide block to the outside of the guide block to lock a following battery cell, so that the battery cells may be aligned at predetermined intervals; and a fixed magnet provided in the guide block and configured to rotate the rear portion of the rotation block toward the inside of the guide block by the magnetic force, so that the front portion thereof may be exposed to the outside of the guide block.

The rotation block may include an auxiliary magnet that may be coupled to the rear portion of the rotation block to correspond to the fixed magnet.

In the rotation block, the front portion thereof may have a first inclined surface at a portion thereof corresponding to the battery cell, the first inclined surface having a shape protruding as the front portion goes toward an end thereof, so that the front portion may protrude to the outside of the guide block when the fixed magnet and the rear portion of the rotation block are brought into close contact with each other, and the rear portion thereof may have a second inclined surface at the portion corresponding to the battery cell, the second inclined surface having a shape protruding as the rear portion goes toward another end thereof, and a third inclined surface having a shape directed downward from an end of the second inclined surface, so that when the front portion is rotated by the forward movement of the battery cell, the front portion may be exposed to the outside of the guide block to lock the battery cell by the third inclined surface.

The first inclined surface may have a gradient relatively greater than a gradient of the second inclined surface.

The guide block may have a seating hole to allow the fixed magnet to be inserted therein.

As described above, the following effect can be expected.

According to the battery cell aligner using the magnetic conveyor, the battery cells can be moved in a line and moved in a state in which the battery cells are spaced apart from each other at predetermined intervals, so that damages to the battery cells that may be caused by a contact between the battery cells can be prevented.

### BRIEF DESCRIPTION OF THE DRAWINGS

The above and other objectives, features, and other advantages of the present invention will be more clearly understood from the following detailed description when taken in conjunction with the accompanying drawings, in which:
FIG. 1 is a perspective view showing a battery cell aligner using a magnetic conveyor according to an embodiment of the present invention.
FIG. 2 is a plan view of a part of FIG. 1.
FIG. 3 is a plan view showing an inside structure of the battery cell aligner using a magnetic conveyor.
FIG. 4 is a side view of FIG. 1.
FIG. 5 is a detailed view showing a rotation block.

### DETAILED DESCRIPTION OF THE INVENTION

Hereinafter, an exemplary embodiment of the present invention will be described in detail with reference to the accompanying drawings. The following description and accompanying drawings are provided for helping more comprehensive understanding of the present invention

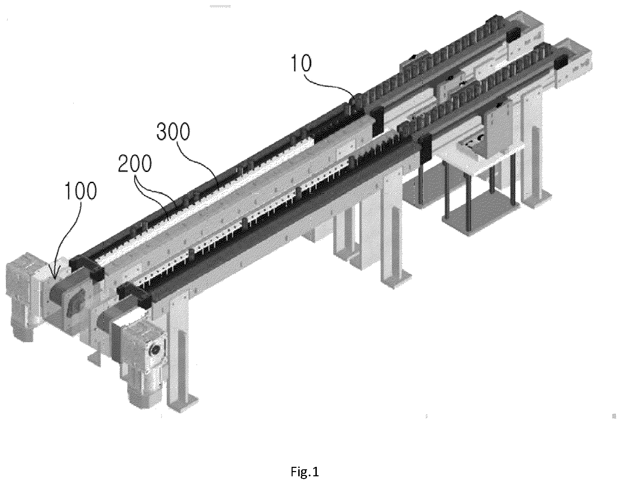

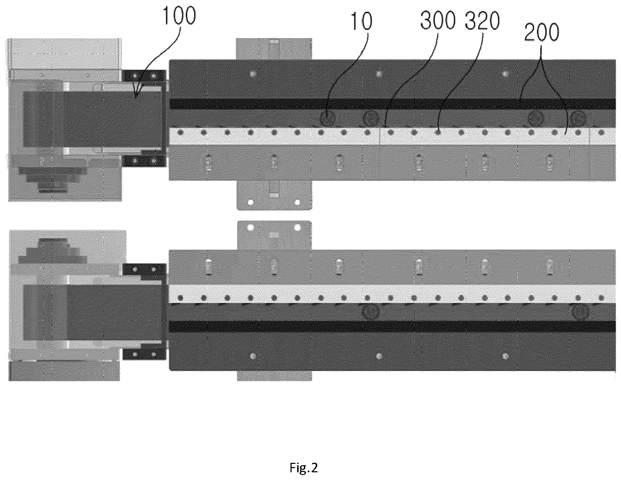

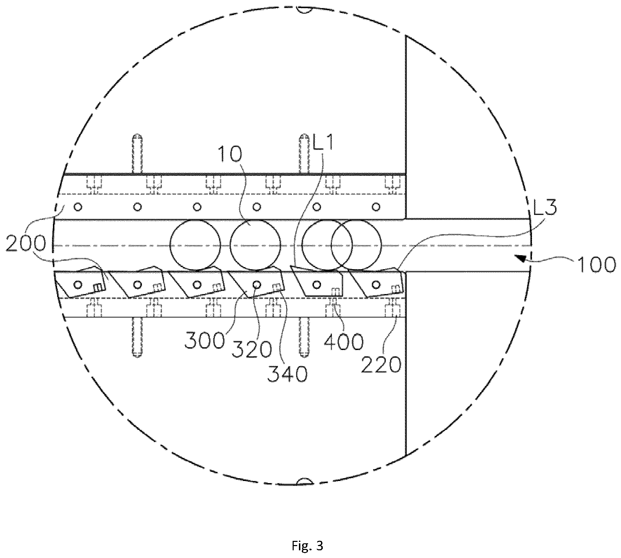

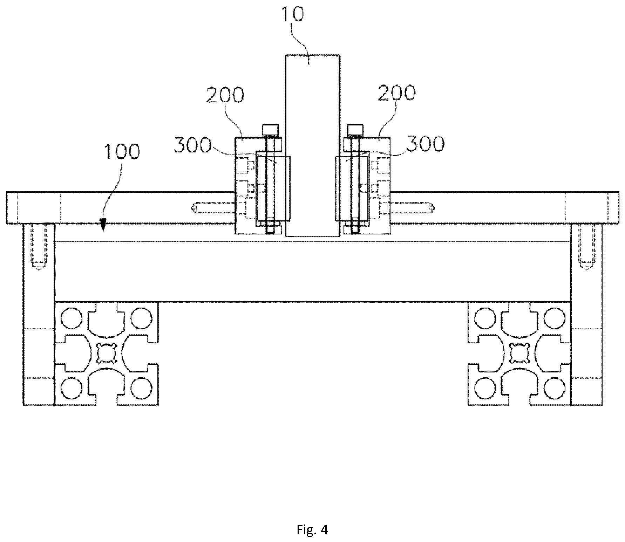

FIG. 1 is a perspective view showing a battery cell aligner using a magnetic conveyor according to an embodiment of the present invention. FIG. 2 is a plan view of a part of FIG. 1. FIG. 3 is a plane view showing an inside structure of the battery cell aligner using a magnetic conveyor. FIG. 4 is a side view of FIG. 1

Referring to FIGS. 1 to 4, the battery cell aligner using a magnetic conveyor of the present disclosure includes a magnetic conveyor 100, a guide block 200, a rotation block 300, and a fixed magnet 400.

The magnetic conveyor 100 is a conveyor with a magnetic belt. The magnetic conveyor 100 may move a battery cell 10 (circular battery cell) in a vertical state without falling by a magnetic force of the magnetic belt.

The guide block 200 is provided at each of opposite side surfaces of the magnetic conveyor 100 to align the battery cell 10.

The rotation block 300 may separate one of battery cells 10 apart from another battery cell at a predetermined interval.

In detail, the rotation block 300 may be rotatably coupled to the guide block 200 around a shaft 320. The rotation block 300 is coupled to the guide block 200 by the shaft 320, and is configured such that a front portion of the rotation block and a rear portion thereof are alternately located at the inside and outside of the guide block 200 by a rotation angle of the rotation block rotated around the shaft 320.

The front portion and the rear portion of the rotation block 300 mean directions in which the battery cell is moved, and a forward direction corresponds to the front portion of the rotation block. In detail, the front portion of the rotation block 300 and the rear portion thereof are distinguished based on the shaft 320.

When the battery cell 10 presses the front portion of the rotation block during the forward movement to rotate the front portion from the outside to the inside of the guide block 200, the rotation block 300 is rotated such that the rear portion of the rotation block is exposed from the inside to the outside of the guide block 200. A following battery cell 10 may be locked by the rear portion of the rotation block so that the battery cells 10 may be moved while being spaced apart from each other at the predetermined interval.

The fixed magnet 400 is provided in the guide block 200. The fixed magnet 400 rotates the rear portion of the rotation block of the rotation block 300 to the inside of the guide block 200 by the magnetic force to expose the front portion of the rotation block to the outside of the guide block 200. Therefore, the force may be converted into the rotation force and the rotation force acts on the rotation block 300 by the forward movement of the battery cell 10.

The guide block 200 has a seating hole 220 in which the fixed magnet 400 is inserted. The fixed magnet 400 may be seated by being inserted into the stepped seating hole 220 of the guide block 200.

Preferably, the rear portion of the rotation block of the rotation block 300 has an auxiliary magnet 340 that may be coupled to the rotation block at a portion corresponding to the fixed magnet 400 to generate a pulling force. The rotation block 300 is made of a non-magnetic material and has a groove in which the auxiliary magnet 340 is inserted.

Meanwhile, the fixed magnet 400 may be a general magnetic or may consist of an electromagnet generating a magnetic force by application of electricity, and magnetic force strength thereof may be adjusted depending on the use environment.

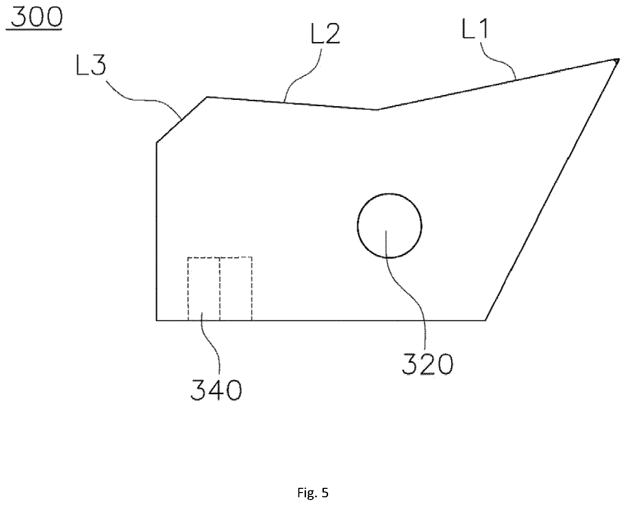

FIG. 5 is a detailed view showing the rotation block.

In the rotation block 300, the front portion of the rotation block has a first inclined surface (L1) at a portion thereof corresponding to the battery cell. The first inclined surface (L1) has a shape protruding as the front portion goes to one end thereof, so that the front portion of the rotation block protrudes to the outside of the guide block when the fixed magnet and the rear portion of the rotation block are brought into close contact with each other. In the rotation block 300, the rear portion of the rotation block has a second inclined surface (L2) at the portion of the rear portion corresponding to the battery cell, second inclined surface (L2) having a shape protruding as the rear portion goes to another end thereof, and a third inclined surface (L3) having a shape directed downward from an end of the second inclined surface (L2) .

Therefore, as shown in FIG. 3, when the front portion of the rotation block is rotated by the forward movement of the battery cell 10, the rear portion of the rotation block protrudes to the outside of the guide block 200 so that the following battery cell 10 is locked by the third inclined surface (L3).

As shown in FIG. 5, the first inclined surface (L1) has a gradient relatively greater than a gradient of the second inclined surface (L2). Whereby, the battery cell may pass through the second inclined surface (L2) and press and pass through the first inclined surface (L1) sufficiently.

As described above, the preferred embodiments of the battery cell aligner using a magnetic conveyor according to the present invention have been disclosed for illustrative purposes, those skilled in the art will appreciate that various modifications, additions and substitutions are possible, as long as they do not depart from the scope of the invention as disclosed in the accompanying claims.

## Claims

1. A battery cell aligner using a magnetic conveyor, the battery cell aligner comprising:
a magnetic conveyor (100) configured to hold a plurality of battery cells (10) by a magnetic force and to move the plurality of battery cells (10) forward;
a guide block (200) provided at each of opposite side surfaces of the magnetic conveyor (100) to align the plurality of battery cells (10);
a rotation block (300) coupled to the guide block (200) by a shaft (320), and configured such that a front portion thereof and a rear portion thereof are alternately located at an inside and an outside of the guide block (200) by a rotation angle of the rotation block (300) rotated around the shaft (320), wherein when the front portion of the rotation block (300) is rotated from the outside of the guide block (200) to the inside thereof by one of the battery cells (10) moved forward, the rear portion thereof is rotated to be exposed from the inside of the guide block (200) to the outside of the guide block to lock a following battery cell (10), so that the battery cells (10) are aligned at predetermined intervals; and
a fixed magnet (400) provided in the guide block (200) and configured to rotate the rear portion of the rotation block (300) toward the inside of the guide block (200) by the magnetic force, so that the front portion thereof is exposed to the outside of the guide block (200).

2. The battery cell aligner of claim 1, wherein the rotation block (300) comprises an auxiliary magnet (340) that may be coupled to the rear portion of the rotation block (300) to correspond to the fixed magnet (400).

3. The battery cell aligner of claim 1, wherein in the rotation block (300),
the front portion thereof has a first inclined surface (L1) at a portion thereof corresponding to the battery cell (10), the first inclined surface (L1) having a shape protruding as the front portion goes toward an end thereof, so that the front portion protrudes to the outside of the guide block (200) when the fixed magnet (400) and the rear portion of the rotation block (300) are brought into close contact with each other, and
the rear portion thereof has a second inclined surface (L2) at the portion corresponding to the battery cell (10), the second inclined surface (L2) having a shape protruding as the rear portion goes toward another end thereof, and a third inclined surface (L3) having a shape directed downward from an end of the second inclined surface (L2), so that when the front portion is rotated by the forward movement of the battery cell (10),
the front portion is exposed to the outside of the guide block (200) to lock the battery cell (10) by the third inclined surface (L3).

4. The battery cell aligner of claim 3, wherein the first inclined surface (L1) has a gradient relatively greater than a gradient of the second inclined surface (L2).

5. The battery cell aligner of claim 1, wherein the guide block (200) has a seating hole (220) to allow the fixed magnet (400) to be inserted therein.

## Patentansprüche

1. Batteriezellenausrichtungseinheit mittels eines Magnetförderers, wobei die Batteriezellenausrichtungseinheit Folgendes umfasst:
einen Magnetförderer (100), der dazu konfiguriert ist, eine Vielzahl von Batteriezellen (10) durch eine Magnetkraft zu halten und die Vielzahl von Batteriezellen (10) vorwärtszubewegen;
einen Führungsblock (200), der an jeder von gegenüberliegenden Seitenflächen des Magnetförderers (100) bereitgestellt ist, um die Vielzahl von Batteriezellen (10) auszurichten;
einen Rotationsblock (300), der durch eine Welle (320) an den Führungsblock (200) gekoppelt und derart konfiguriert ist, dass sich ein vorderer Abschnitt davon und ein hinterer Abschnitt davon durch einen Rotationswinkel des Rotationsblocks (300), der um die Welle (320) rotiert, abwechselnd an einer Innenseite und einer Außenseite des Führungsblocks (200) befinden, wobei, wenn der vordere Abschnitt des Rotationsblocks (300) dadurch von der Außenseite des Führungsblocks (200) zur Innenseite davon rotiert wird, dass eine der Batteriezellen (10) vorwärts bewegt wird, der hintere Abschnitt davon derart rotiert wird, dass er von der Innenseite des Führungsblocks (200) zur Außenseite des Führungsblocks frei liegt, um eine folgende Batteriezelle (10) zu verriegeln, sodass die Batteriezellen (10) in vorbestimmten Abständen ausgerichtet sind; und
einen festen Magneten (400), der in dem Führungsblock (200) bereitgestellt und dazu konfiguriert ist, den hinteren Abschnitt des Rotationsblocks (300) durch die Magnetkraft in Richtung der Innenseite des Führungsblocks (200) zu rotieren, sodass der vordere Abschnitt davon zur Außenseite des Führungsblocks (200) frei liegt.

2. Batteriezellenausrichtungseinheit nach Anspruch 1, wobei der Rotationsblock (300) einen Zusatzmagneten (340) umfasst, der an den hinteren Abschnitt des Rotationsblocks (300) gekoppelt sein kann, um dem festen Magneten (400) zu entsprechen.

3. Batteriezellenausrichtungseinheit nach Anspruch 1, wobei bei dem Rotationsblock (300) der vordere Abschnitt davon eine erste geneigte Fläche (L1) an einem Abschnitt davon aufweist, die der Batteriezelle (10) entspricht, wobei die erste geneigte Fläche (L1) eine Form aufweist, die hervorsteht, wenn der vordere Abschnitt in Richtung eines Endes davon verläuft, sodass der vordere Abschnitt zur Außenseite des Führungsblocks (200) hervorsteht, wenn der feste Magnet (400) und der hintere Abschnitt des Rotationsblocks (300) in engen Kontakt miteinander gebracht werden, und der hintere Abschnitt davon eine zweite geneigte Fläche (L2) an dem Abschnitt aufweist, die der Batteriezelle (10) entspricht, die eine Form aufweist, die hervorsteht, wenn der hintere Abschnitt in Richtung eines anderen Endes davon verläuft, und eine dritte geneigte Fläche (L3) eine Form aufweist, die von einem Ende der zweiten geneigten Fläche (L2) nach unten gerichtet ist, sodass, wenn der vordere Abschnitt durch die Vorwärtsbewegung der Batteriezelle (10) rotiert wird, der vordere Abschnitt zur Außenseite des Führungsblocks (200) frei liegt, um die Batteriezelle (10) durch die dritte geneigte Fläche (L3) zu verriegeln.

4. Batteriezellenausrichtungseinheit nach Anspruch 3, wobei die erste geneigte Fläche (L1) einen Gradienten aufweist, der relativ größer als ein Gradient der zweiten geneigten Fläche (L2) ist.

5. Batteriezellenausrichtungseinheit nach Anspruch 1, wobei der Führungsblock (200) ein Aufnahmeloch (220) aufweist, um es dem festen Magneten (400) zu ermöglichen, darin eingesetzt zu werden.

## Revendications

1. Aligneur d'éléments de batterie utilisant un convoyeur magnétique, l'aligneur d'éléments de batterie comprenant :
un convoyeur magnétique (100) configuré pour maintenir une pluralité d'éléments de batterie (10) par une force magnétique et pour déplacer la pluralité d'éléments de batterie (10) vers l'avant ;
un bloc de guidage (200) prévu au niveau de chacune de surfaces de côté opposées du convoyeur magnétique (100) pour aligner la pluralité d'éléments de batterie (10) ;
un bloc de rotation (300) couplé au bloc de guidage (200) par un arbre (320), et configuré de sorte qu'une portion avant de celui-ci et une portion arrière de celui-ci soient situées en alternance au niveau d'un intérieur et d'un extérieur du bloc de guidage (200) par un angle de rotation du bloc de rotation (300) mis en rotation autour de l'arbre (320),
dans lequel, lorsque la portion avant du bloc de rotation (300) est mise en rotation depuis l'extérieur du bloc de guidage (200) vers l'intérieur de celui-ci par l'un des éléments de batterie (10) déplacés vers l'avant, la portion arrière de celui-ci est mise en rotation pour être exposée depuis l'intérieur du bloc de guidage (200) vers l'extérieur du bloc de guidage pour verrouiller un élément de batterie (10) suivant, de sorte que les éléments de batterie (10) soient alignés à des intervalles prédéterminés ; et
un aimant fixe (400) prévu dans le bloc de guidage (200) et configuré pour mettre en rotation la portion arrière du bloc de rotation (300) vers l'intérieur du bloc de guidage (200) par la force magnétique, de sorte que la portion avant de celui-ci soit exposée à l'extérieur du bloc de guidage (200).

2. Aligneur d'éléments de batterie selon la revendication 1, dans lequel le bloc de rotation (300) comprend un aimant auxiliaire (340) qui peut être couplé à la portion arrière du bloc de rotation (300) pour correspondre à l'aimant fixe (400).

3. Aligneur d'éléments de batterie selon la revendication 1, dans lequel, dans le bloc de rotation (300), la portion avant de celui-ci a une première surface inclinée (L1) au niveau d'une portion de celui-ci correspondant à l'élément de batterie (10), la première surface inclinée (L1) ayant une forme faisant saillie à mesure que la portion avant va vers une extrémité de celui-ci, de sorte que la portion avant fait saillie vers l'extérieur du bloc de guidage (200) lorsque l'aimant fixe (400) et la portion arrière du bloc de rotation (300) sont amenés en contact étroit l'un avec l'autre, et
la portion arrière de celui-ci a une deuxième surface inclinée (L2) au niveau de la portion correspondant à l'élément de batterie (10), la deuxième surface inclinée (L2) ayant une forme faisant saillie à mesure que la portion arrière va vers une autre extrémité de celui-ci, et une troisième surface inclinée (L3) ayant une forme dirigée vers le bas depuis une extrémité de la deuxième surface inclinée (L2), de sorte que, lorsque la portion avant est mise en rotation par le mouvement vers l'avant de l'élément de batterie (10), la portion avant soit exposée à l'extérieur du bloc de guidage (200) pour verrouiller l'élément de batterie (10) par la troisième surface inclinée (L3).

4. Aligneur d'éléments de batterie selon la revendication 3, dans lequel la première surface inclinée (L1) a un gradient relativement supérieur à un gradient de la deuxième surface inclinée (L2).

5. Aligneur d'éléments de batterie selon la revendication 1, dans lequel le bloc de guidage (200) a un trou d'assise (220) pour permettre d'y insérer l'aimant fixe (400).
